# EUROPEAN PATENT APPLICATION

(11) **EP 2 789 832 A1**
(43) Date of publication of application: **15.10.2014**
(21) Application number: 11877163.3
(22) Date of filing: 09.12.2011
(51) Int. Cl.: F02D 29/02, F02B 33/00, H01M 8/00

(54) **INTERNAL COMBUSTION ENGINE**

(71) Applicant: Toyota Jidosha Kabushiki Kaisha, Toyota-shi, Aichi 471-8571 (JP)
(72) Inventor: NAKAO, Hidefumi, Toyota-shi Aichi 471-8571 (JP); SUGANUMA, Hiroyuki, Toyota-shi Aichi 471-8571 (JP); YAMAMOTO, Kohsuke, Toyota-shi Aichi 471-8571 (JP)
(74) Representative: Intès, Didier Gérard André
(86) International application number: PCT/JP2011/006900
(87) International publication number: WO 2013/084273

(57) **Abstract**

An aspect of the invention provides an internal combustion engine (10) including: a system (84) that automatically stops the internal combustion engine (10) when a predetermined stopping condition is established and automatically restarts the internal combustion engine when a predetermined restarting condition is established thereafter; a turbocharger (24) including a compressor (28) provided in an intake passage (16) and a turbine (26) provided in an exhaust passage (18); and a power generation device (40) including a power generation main body portion (42) to which an air introduction passage (44), which is connected to the intake passage to be capable of introducing air that passes through the compressor, and a gas discharge passage (50), which is connected to the exhaust passage to be capable of supplying gas to the turbine, are connected. The power generation device (40) is configured to operate at least when the internal combustion engine is stopped by the system (84).

## Description

### TECHNICAL FIELD

The invention relates to an internal combustion engine including a system that automatically stops the internal combustion engine and then automatically restarts the internal combustion engine.

### BACKGROUND ART

When a vehicle stops temporarily such that an engine enters an idling condition, it is desirable to stop the engine as often as possible in order to reduce exhaust gas and improve fuel efficiency. A control system that stops and restarts an engine automatically at such times has been developed in response to this demand.

For example, an internal combustion engine described in Patent Document 1 includes a control unit that executes control to stop the internal combustion engine automatically when a predetermined stopping condition is established, and restart the internal combustion engine automatically when a predetermined release condition is established while the engine is stopped.

Further, Patent Document 2 discloses pre-assist control for eliminating a turbo lag, in which, when a determination is made to start an internal combustion engine, a compressor of a turbocharger is forcibly driven by operating a motor using a supply of power from a battery before the internal combustion engine is started. According to the description in Patent Document 2, this pre-assist control can be implemented on a vehicle having an internal combustion engine that is stopped when the vehicle stops and restarted when the vehicle moves.
Patent Document 1: Japanese Patent Application Publication No. 2006-183629 (JP 2006-183629 A)
Patent Document 2: Japanese Patent Application Publication No. 2008-95669 (JP 2008-95669 A)

### SUMMARY OF THE INVENTION

In an internal combustion engine having a system that automatically stops and restarts the engine, an operation response of the internal combustion engine can be improved by implementing the pre-assist control described above when the engine is restarted. However, a typical internal combustion engine includes a system that generates power using power from the internal combustion engine, and therefore room for improvement exists in terms of an amount of power consumed when a compressor of a turbocharger is driven forcibly by supplying electricity from a battery while the internal combustion engine is stopped, for example.

The invention has been designed in consideration of this point, and an object thereof is to provide an internal combustion engine with which power consumption can be reduced and an operation response during restarting of the engine can be improved.

A first aspect of the invention provides an internal combustion engine including:
a system that automatically stops the internal combustion engine when a predetermined stopping condition is established and automatically restarts the internal combustion engine when a predetermined restarting condition is established following establishment of the predetermined stopping condition;
a turbocharger including a compressor provided in an intake passage of the internal combustion engine and a turbine provided in an exhaust passage of the internal combustion engine; and
a power generation device including a power generation main body portion to which an air introduction passage, which is connected to the intake passage to be capable of introducing air that passes through the compressor, and a gas discharge passage, which is connected to the exhaust passage to be capable of supplying gas to the turbine, are connected, the power generation device being configured to operate at least when the internal combustion engine is stopped by the system.

Preferably, the power generation device is a fuel cell system, and the power generation main body portion is a fuel cell main body portion.

Preferably, a cooling device is provided in the intake passage on a downstream side of a connection portion between the air introduction passage and the intake passage.

Preferably, a valve is provided in a connection portion between the air introduction passage and the intake passage, and when the internal combustion engine is stopped by the system, the valve is operated to introduce all of the air that passes through the compressor into the air introduction passage.

Preferably, an oil supply device configured to supply oil in the turbocharger and a cooling liquid supply device configured to cool the turbocharger can be operated by electricity from a battery connected to the power generation device, and are operated when the internal combustion engine is stopped by the system.

Preferably, at least one of the oil supply device and the cooling liquid supply device is operated to control a charging amount of the battery.

The internal combustion engine preferably further includes discharge amount increasing control means for increasing an amount of gas discharged from the power generation device when an acceleration request is issued either upon establishment of the predetermined restarting condition or within a predetermined period following establishment of the predetermined restarting condition, in comparison with a case where the acceleration request is not issued.

Preferably, the discharge amount increasing control means increases the amount of discharged gas by executing at least one of control to increase an amount of air supplied to the air introduction passage and control to increase an amount of fuel supplied to the power generation main body portion.

In an embodiment, the internal combustion engine may further include a valve mechanism for adjusting an amount of exhaust gas flowing into the turbine, and when the acceleration request is issued, the discharge amount increasing control means may either control the valve mechanism to increase the amount of exhaust gas flowing into the turbine or execute the control to increase the amount of fuel supplied to the power generation main body portion, in comparison with a case where the acceleration request is not issued.

In another embodiment, the turbocharger may further include a variable nozzle mechanism for varying an opening area of a turbine blade of the turbine, and when the acceleration request is issued, the discharge amount increasing control means may control the variable nozzle mechanism to increase a rotation speed of the turbine blade and execute the control to increase the amount of fuel supplied to the power generation main body portion, in comparison with a case where the acceleration request is not issued.

A second aspect of the invention provides a vehicle including the internal combustion engine described above.

The aforesaid and further features and advantages of the invention will become apparent from the attached drawings and the following description of exemplary embodiments.

### BRIEF DESCRIPTION OF THE DRAWINGS

[FIG. 1] FIG. 1 is a schematic view showing an internal combustion engine and a vehicle in which the internal combustion engine is installed according to a first embodiment of the invention.
[FIG. 2] FIG. 2 is a flowchart of the first embodiment.
[FIG. 3] FIG. 3 is a block diagram showing flows of electricity, gas, fuel, cooling water, and oil generated during an operation of a power generation device in a condition where the internal combustion engine of FIG. 1 is stopped.
[FIG. 4] FIG. 4 is a flowchart of a second embodiment of the invention.
[FIG. 5] FIG. 5 is a schematic view showing an internal combustion engine and a vehicle in which the internal combustion engine is installed according to a third embodiment of the invention.
[FIG. 6] FIG. 6 is a flowchart of the third embodiment.

### MODES FOR CARRYING OUT THE INVENTION

First, a first embodiment of the invention will be described in detail.

An internal combustion engine (which may be referred to simply as an engine hereafter) 10 according to the first embodiment of the invention is installed in a vehicle 12. The engine 10 includes an engine main body portion 14, an intake passage 16 and an exhaust passage 18 connected to the engine main body portion 14, and a fuel injection device 22 that supplies fuel from a fuel tank (not shown) in response to an operation of a fuel pump 20. Fuel injected through a fuel injection valve (not shown) of the fuel injection device 22 forms an air-fuel mixture with air introduced through the intake passage 16, whereupon the air-fuel mixture is burned in a cylinder of the engine main body portion 14 and resulting exhaust gas is discharged through the exhaust passage 18. In the engine 10, an air cleaner and an intake throttle valve (neither of which are shown in the drawing) are provided on an upstream end side of the intake passage 16 in order from the upstream side.

The engine 10 further includes a turbocharger 24. A turbine 26 of the turbocharger 24 is disposed in the exhaust passage 18, and a compressor 28 of the turbocharger 24, which houses a compressor wheel that is connected coaxially to a turbine wheel of the turbine 26, is disposed in the intake passage 16. By driving the turbine wheel of the turbine 26 to rotate using the exhaust gas led through the exhaust passage 18, the compressor wheel of the compressor 28 can be rotated, and as a result, the engine 10 can be turbocharged. An intercooler 30 serving as a cooling device for cooling intake air that increases in temperature when pressurized by the compressor 28 is provided in the intake passage on a downstream side of the compressor 28.

Further, a valve mechanism 28 is provided to adjust an amount of exhaust gas flowing into the turbine 26 of the turbocharger 24. The valve mechanism 28 includes a valve 32, and the valve 32 is provided in a bypass passage 34 formed to bypass the turbine 26. The valve mechanism 28 or the valve 32 may typically be referred to as a wastegate valve. The valve 32 or valve mechanism 28 according to this embodiment is mechanically configured such that when an exhaust gas pressure reaches or exceeds a predetermined pressure, the valve 32 or valve mechanism 28 is pressed by the exhaust gas pressure, causing a spring to be compressed such that the valve 32 or valve mechanism 28 opens. When the engine is stopped, the valve 32 or valve mechanism 28 is typically closed. However, the valve 32 or valve mechanism 28 may have various other mechanical configurations, for example a configuration according to which a diaphragm of an actuator is pushed open by a turbocharging pressure when the turbocharging pressure reaches or exceeds a predetermined pressure. Alternatively, the valve 32 or valve mechanism 28 may be constituted by a solenoid driven valve.

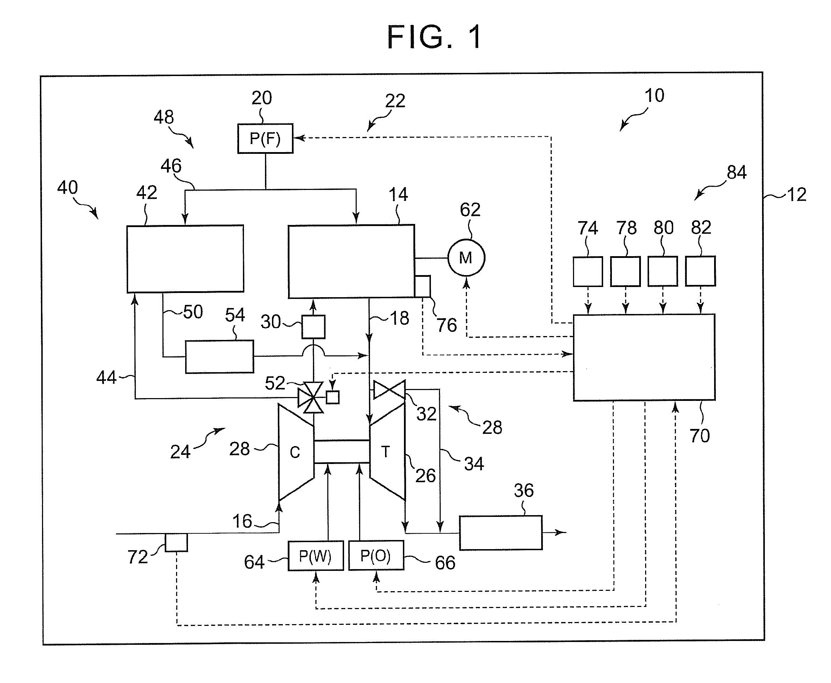

An exhaust gas purification device 36 is provided in the exhaust passage 18 so that the exhaust gas, having passed through the turbine 26 and the valve 32, is led into the exhaust gas purification device 36. The exhaust gas purification device 36 may have various configurations. For example, the exhaust gas purification device 36 may include an oxidation catalyst that causes unburned components such as HC and CO to react with O₂ in order to obtain CO, CO₂, H₂O, and so on, or may be constituted by a so-called three-way catalyst. Further, the exhaust gas purification device 36 may include a filter structure such as a particulate filter (DPF) that collects microparticles (particulate (PM)) such as soot contained in the exhaust gas, and in this case, the exhaust gas purification device 36 may also include an oxidation catalyst. Pt/CeO₂, Mn/CeO₂, Fe/CeO₂, Ni/CeO₂, Cu/CeO₂, and so on, for example, may be used as a catalytic material of the oxidation catalyst. The exhaust gas purification device 36 may also include a NOx catalyst to purify nitrogen oxide (NOx) in the exhaust gas. Note that although FIG. 1 shows only one exhaust gas purification device 36, two or more exhaust gas purification devices may be provided in series or in parallel. When a plurality of exhaust gas purification devices are provided, the respective exhaust gas purification devices may have identical or different configurations.

The engine 10 includes a power generation device 40. The power generation device 40 according to this embodiment is constituted by a fuel cell system that is configured to generate power through an electrochemical reaction between air and fuel. In this embodiment in particular, the power generation device 40 is constituted by a solid oxide fuel cell (SOFC). The power generation device 40 is configured to be capable of operating both when the engine 10 is in an operative condition and, as will be described in detail below, when the engine 10 is in an inoperative condition. Note that a part of an ECU to be described below functions as a control device or control means for controlling the power generation device 40.

The power generation device 40 includes a power generation main body portion constituted by a fuel cell main body portion 42. An air introduction passage (an intake passage of the power generation device) 44 is connected to the fuel cell main body portion 42. The air introduction passage 44 is connected to the fuel cell main body portion 42 such that air is introduced into the fuel cell main body portion 42. Further, a fuel supply passage 46 is connected to the fuel cell main body portion 42. The fuel supply passage 46 is included in a fuel supply device 48, and the device 48 is provided to supply fuel to the fuel cell main body portion 42. Furthermore, a gas discharge passage (an exhaust passage of the power generation device) 50 is connected to the fuel cell main body portion 42. The gas discharge passage 50 is connected to the fuel cell main body portion 42 to discharge gas from the fuel cell main body portion 42.

The fuel cell main body portion 42 may be referred to as a cell stack, and has a structure including connected single cells, each of which is constituted by a fuel electrode serving as an anode, an air electrode serving as a cathode, and an electrolyte. An oxide ion conductor constituted by a ceramic is used as the electrolyte. Note that the invention does not exclude a configuration in which the fuel cell main body portion 42 includes only one cell instead of a plurality of cells.

The fuel supply device 48 includes the aforesaid pump 20 for supplying the fuel in the fuel tank (not shown). In this embodiment, the fuel supply device 48 is formed integrally with the fuel injection device 22, and therefore includes the fuel tank and the fuel pump 20 of the fuel injection device 22. Note, however, that the fuel supply device 48 may be formed completely independently of the fuel injection device 22, and in this case, engine fuel and power generation fuel may be identical or different. A fuel other than fuels such as gasoline and light oil, for example natural gas or propane gas, can be used as the power generation fuel. As described above, the power generation device 40 is constituted by an SOFC and therefore operates at a relatively high temperature (800 to 1000°C, for example). Accordingly, the fuel can be internally reformed using the high temperature of the SOFC, and therefore the power generation device 40 does not include a fuel reformer. However, the fuel supply device 48 of the power generation device 40 may include a fuel reformer. The power generation device 40 may be manufactured so as to be constituted by a polymer electrolyte fuel cell (PEFC), a molten carbonate fuel cell (MCFC), or a phosphoric acid fuel cell (PAFC), for example, and if necessary, the fuel supply device 48 may include a fuel reformer of a required type.

The air introduction passage 44 of the power generation device 40 is connected to the intake passage 16 of the engine 10 to be capable of introducing the air that passes through the compressor 28. In this embodiment, the air introduction passage 44 is connected to the intake passage downstream of the compressor 28. A valve 52 is provided in a connection portion between the air introduction passage 44 and the intake passage 16. In this embodiment, the valve 52 is constituted by a solenoid driven valve. Here, the valve 52 is a three-way valve that can be switched selectively to any one of a valve position I in which air can flow to both the engine main body portion 14 and the fuel cell main body portion 42, a valve position II in which the air introduction passage 44 is blocked so that air flows to the engine main body portion 14 but not to the fuel cell main body portion 42, and a valve position III in which the air introduction passage 44 is open so that air flows to the fuel cell main body portion 42 but the intake passage 16 is blocked midway so that no air flows to the engine main body portion 14. The valve position I and the valve position II may be referred to as engine operation permission positions, while the valve position III may be referred to as a power generation only position. Note that the air introduction passage 44 may be connected directly to the compressor 28, and in this case, the air introduction passage 44 is preferably connected to a position of the compressor 28 in which the air that passes through the compressor wheel of the compressor 24 can flow into the air introduction passage 44. Here, however, the intercooler 30 is disposed in the intake passage on the downstream side of the connection portion between the air introduction passage 44 and the intake passage 16. Therefore, air having a relatively high temperature can be supplied to the fuel cell main body portion 42, while air having a relatively low temperature after passing through the intercooler 30 can be supplied to the engine main body portion 14. Note that the invention does not exclude a configuration in which the intercooler 30 is disposed in the intake passage on an upstream side of the connection portion between the air introduction passage 44 and the intake passage 16, but the intercooler 30 is preferably disposed in the intake passage on the downstream side of the connection portion so that warm or hot air can be led favorably into the fuel cell main body portion 42.

The gas discharge passage 50 of the power generation device 40 is connected to the exhaust passage 18 of the engine 10 so that exhaust gas, or in other words gas, can be supplied to the turbine 26. In this embodiment, the gas discharge passage 50 is connected to the exhaust passage upstream of the turbine 26. A valve such as a check valve may be provided in the gas discharge passage 50 to ensure that exhaust gas from the engine 10, for example, does not flow into the gas discharge passage 50, but here, no such valve is provided. A connection portion between the gas discharge passage 50 and the exhaust passage 18 is positioned in the exhaust passage on an upstream side of the bypass passage 34 and the valve 32. As a result, gas constituted by the exhaust gas that reaches the exhaust passage 18 from the gas discharge passage 50 can pass through the turbine 26, and when the valve 32 opens, the gas can also pass through the valve 32. Exhaust gas, or in other words gas, discharged from the power generation device 40 flows into the exhaust gas purification device 36. Note that a reformer 54 is provided in the gas discharge passage 50 to adjust components of the gas. More specifically, the reformer 54 is configured to break down hydrocarbon components, and is configured here to include an oxidation catalyst, similarly to the exhaust gas purification device 36 described above. However, any other configuration, such as an electrolysis configuration, for example, may be employed instead. Moreover, the reformer 54 may be omitted.

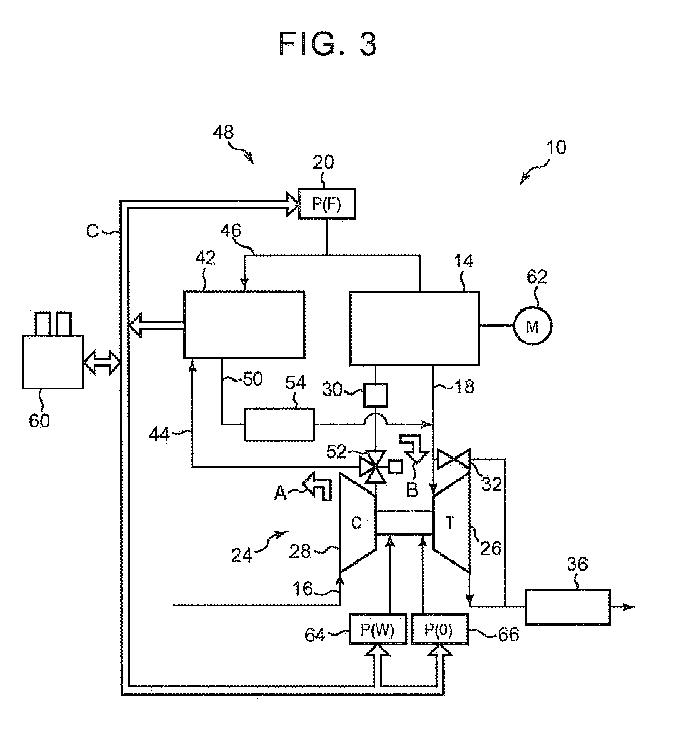

Electricity generated by the power generation device 40 configured as described above is stored in (charged to) a battery 60 (shown in FIG. 3 but not in FIG. 1). The engine 10 differs from a conventional engine in not including a power generation device that converts mechanical kinetic energy transmitted from the engine into electric energy, or more specifically an alternator. Hence, in the engine 10 of the vehicle 12, the only power generation device is the power generation device 40, and therefore the electricity stored in the battery 60 is dependent only on the power generation device 40. Note that the invention also allows a configuration in which a power generation device such as an alternator used widely in conventional engines or a configuration in which a power generation device (a regenerative power generation device) such as that of a so-called hybrid vehicle is provided in the engine 10 in addition to the power generation device 40.

In the engine 10, the electricity stored in the battery 60 is used to operate a starter motor 62 of the engine 10, to operate the valve 52, and to operate the fuel pump 20. The electricity in the battery 60 is also used to operate a water pump 64 of a cooling liquid supply device configured to cool the turbocharger 24. Moreover, the electricity in the battery 60 is used to operate an oil pump 66 of an oil supply device configured to supply oil, or in other words lubricating oil, in the turbocharger 20. In this embodiment, the power generation device 40 is constituted by an SOFC, and therefore temperature control of the stack constituting the fuel cell main body portion 42, although not described here, is performed using process air, thereby eliminating the need for a cooling device or a cooling water system. However, a cooling water system may be provided in the power generation device 40, and in this case, a pump that supplies the cooling water can be driven using the electricity in the battery 60.

The operations of the starter motor 62, the valve 52, the fuel pump 20, the water pump 64, the oil pump 66, and so on are controlled by an electronic control unit (referred to hereafter as an ECU) 70 that essentially functions as a control device or control means for the engine 10 and the vehicle 12. The ECU 70 is constituted by a computer, or has a computer as a main body, and includes a central processing unit (CPU), storage devices such as a read only memory (ROM) and a random access memory (RAM), an analog-to-digital (A/D) converter, an input interface, an output interface, and so on. Various control programs and data are stored in the storage devices. Various sensors, including sensors to be described below, are electrically connected to the input interface. The ECU 70 outputs operation signals (drive signals) electrically from the output interface on the basis of output (detection signals) from the various sensors in order to operate the engine 10, or in other words to drive and operate the vehicle 12, smoothly in accordance with a preset program (including data).

The engine 10 and the vehicle 12 include sensors that output signals indicating various detected values (including estimated values) electrically to the ECU 70. Here, several of these sensors will be described specifically. An air flow meter 72 that detects an intake air amount is provided in the intake passage 16. Further, an accelerator depression amount sensor 74 is provided to detect a position corresponding to a depression amount of an accelerator pedal (not shown) operated by a driver, or in other words an accelerator depression amount. Furthermore, a crank position sensor 76 is attached in order to detect a crank rotation signal from a crankshaft of the engine 10. Here, the crank position sensor 76 is also used as an engine rotation speed sensor that detects an engine rotation speed. Further, a vehicle speed sensor 78 is provided to detect a speed (a vehicle speed) of the vehicle 12 in which the engine 10 is installed. Furthermore, a stop lamp switch 80 is provided as a brake request detection sensor that outputs a signal corresponding to an operating condition of a brake pedal (not shown). The stop lamp switch 80 switches ON when the brake pedal is depressed. Further, a capacity detection sensor 82 is provided to detect a capacity or a remaining capacity of the battery 60. Note that the capacity detection sensor 82 is constituted by a current sensor, for example.

The engine 10 is also provided with a stop/restart system 84 that automatically stops the engine 10 when a predetermined stopping condition is established and automatically restarts the engine 10 when a predetermined restarting condition (a predetermined release condition) is established following establishment of the predetermined stopping condition. A part of the ECU 70 functions as a control unit or control means of the system 84. For example, when the vehicle 12 stops temporarily while traveling on the basis of a stop display on a traffic signal lamp or the like such that the engine 10 enters an idling condition, the ECU 70 performs control, specifically, idle reduction control (also referred to as idle stop control in Japan) to stop the engine 10 automatically for a temporary period at a predetermined timing and then restart the engine 10 at a subsequent predetermined timing. In other words, stopping condition establishment determining means for determining whether or not the predetermined stopping condition is established constitutes a part of the ECU 70. Further, restarting condition establishment determining means for determining whether or not the predetermined restarting condition is established constitutes a part of the ECU 70. Furthermore, engine stoppage control means for executing control to stop the engine 10, such as prohibiting fuel injection from the fuel injection valve, constitutes a part of the ECU 70, and engine restart control means for executing control to restart the engine 10 constitutes a part of the ECU 70. These means are associated with each other either directly or indirectly.

More specifically, during this type of idle reduction control, the engine 10 is stopped temporarily by the ECU 70 when the predetermined stopping condition is satisfied. Here, the predetermined stopping condition is satisfied when the vehicle is stationary and a braking operation is underway. The vehicle is determined to be stationary on the basis of the output from the vehicle speed sensor 78, and this determination corresponds to a determination of whether or not the vehicle speed is zero. A braking operation is determined to be underway on the basis of the output from the stop lamp switch 80 serving as braking operation detecting means. More specifically, this determination corresponds to a determination of whether or not the stop lamp switch 80 is ON. Here, a braking operation is also determined to be underway when the ECU 70 determines that the accelerator pedal is not depressed on the basis of the output from the accelerator depression amount sensor 74 serving as acceleration request detecting means.

Meanwhile, the engine 10 is started, or in other words restarted, by the ECU 70 after being stopped in the manner described above when the predetermined restarting condition is satisfied. Here, the predetermined restarting condition is satisfied when at least one of the stopping conditions described above is no longer satisfied. For example, the predetermined restarting condition is determined to be established when the braking operation is released, or in other words when the stop lamp switch 80 switches from ON to OFF. Further, for example, the predetermined restarting condition is determined to be established when the accelerator pedal is depressed while the engine 10 is stopped in accordance with the idle reduction control.

Incidentally, an improvement in an operation response of the engine 10 is desirable when the engine 10 is restarted after being temporarily stopped by the idle reduction control described above. In a case where the driver depresses the accelerator pedal in order to restart the engine 10, for example, the engine 10 has been stopped up to that point, and therefore a time lag occurs between depression of the accelerator pedal and obtaining an engine output corresponding to the depression amount of the accelerator pedal. Furthermore, likewise when the driver causes the vehicle to advance gradually simply by removing his/her foot from the brake pedal, and in particular when the vehicle 12 includes an automatic transmission, a certain amount of time is required to return the engine 10 to its condition immediately before the engine stoppage. In consideration of a maneuvering feel of the vehicle 12 to the driver, this time is preferably as short as possible. It is therefore extremely worthwlile in technological terms to improve the operation response of the engine 10 during restarting of the engine 10.

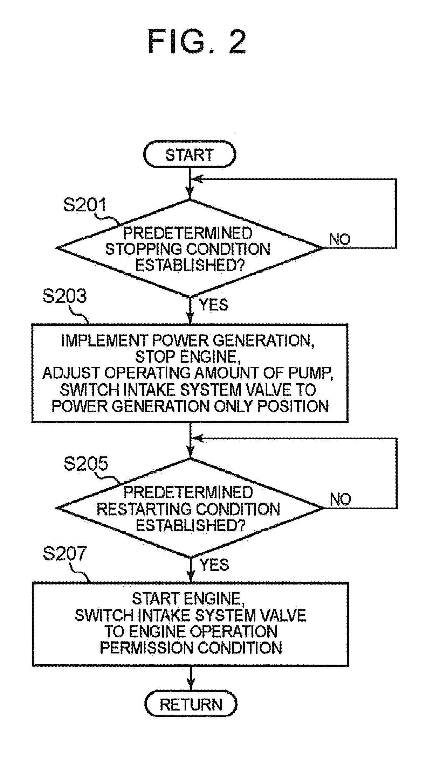

Here, therefore, the power generation device 40 is operated while the engine 10 is temporarily stopped by the idle reduction control until the engine 10 is restarted. The operation of the power generation device 40 during the idle reduction control will be described below on the basis of a flowchart shown in FIG. 2.

As is evident from the connection arrangement between the passages 44, 50, when the power generation device 40 is operated while the engine 10 is stopped by the idle reduction control, the turbocharger 24 is driven. Hence, the water pump 64 and the oil pump 66 are electric pumps, as noted above. More specifically, appropriate driving of the turbocharger 24 is promoted by operating both the water pump 64 and the oil pump 66 from a point at which an engine operation start request is issued by the driver (for example, when an engine ignition switch is switched ON) to a point at which an engine stop request is issued by the driver (for example, when the engine ignition switch is switched OFF), regardless of the operating condition of the engine 10. Note that in FIG. 1, flows of gas (including air), fuel, cooling water, and oil when the engine 10 and the power generation device 40 are in an operative condition are illustrated schematically by arrows.

In step S201 of FIG. 2, a determination is made as to whether or not the predetermined stopping condition of the idle reduction control is established. The predetermined stopping condition is as described above. When the predetermined stopping condition is not satisfied (when the determination of step S201 is negative), the engine 10 is maintained in a driving condition, or in other words the operative condition.

When the predetermined stopping condition is established such that the determination of step S201 is affirmative, the engine 10 is stopped and the power generation device 40 is set in the operative condition in step S203. When the power generation device 40 is already in the operative condition, the operative condition is maintained. When the power generation device 40 is in a stopped condition at that point, on the other hand, the power generation device 40 is set in the operative condition.

Hence, when the engine 10 is temporarily stopped by the system 84, the power generation device 40 enters the operative condition. When the engine 10 is stopped, an operation of the valve (the intake system valve) 52 is controlled so that while the engine 10 is stopped by the system 84, all of the air passing through the compressor 28 is introduced into the air introduction passage 44. In other words, the valve 52 is controlled to the power generation only position, i.e. the aforesaid valve position III. When the engine 10 is stopped by the idle reduction control, therefore, the air that passes through the compressor 28 in the intake passage 16 can be led to the fuel cell main body portion 42, as shown by an arrow A in FIG. 3. At this time, the intake throttle valve, not shown in the drawings, is also open, for example fully open. Note, however, that the pump 20 is preferably controlled such that an air supply amount and a fuel supply amount in the power generation device 40 are counterbalanced, or such that the fuel amount is smaller than the air amount.

By operating the pump 20 of the fuel supply device 48 when the engine 10 is stopped by the idle reduction control, fuel is supplied to the fuel cell main body portion 42. As a result, power is generated by the fuel cell main body portion 42 such that gas is discharged through the gas discharge passage 50. At this time, the valve 32 basically remains closed, and therefore, as shown by an arrow B in FIG. 3, the gas is led into the turbine 26 so as to drive the turbine wheel to rotate. Hence, by operating the power generation device 40 while the engine 10 is stopped, the turbocharger 24 is set in a driven condition.

In FIG. 3, flows of electricity, gas, fuel, cooling water, and oil generated by the operation of the power generation device 40 performed while the engine 10 is stopped are illustrated schematically by a line C and arrows. As is evident from FIG. 3 and the above description, when the engine 10 is stopped by the idle reduction control, electricity is generated by operating the power generation device 40, but electricity is also consumed. Due to the limited capacity of the battery 60 and the necessity of preventing overcharging of the battery 60 while holding the remaining capacity of the battery 60 at or above a predetermined capacity, an amount of generated electricity and an amount of used electricity are adjusted by the ECU 70. In this embodiment, a part of the ECU 70 that functions as a control device for the oil supply device and a part of the ECU 70 that functions as a control device for the cooling liquid supply device control the operations of both the water pump 64 and the oil pump 66 (operation amount adjustment control) on the basis of the output of the sensor 82 so that a power amount, or in other words a battery charging amount, is controlled in accordance with the remaining capacity of the battery 60. Note that for this purpose, the operation of at least one of the water pump 64 and the oil pump 66 may be controlled.

In step S205 following step S203, a determination is made as to whether or not the predetermined restarting condition of the idle reduction control is established. The predetermined restarting condition is as described above. When the predetermined restarting condition is not satisfied (when the determination of step S205 is negative), the engine 10 is maintained in the stopped condition and the power generation device 40 is maintained in the operative condition.

When the predetermined restarting condition is established such that the determination of step S205 is affirmative, the engine 10 is restarted in step S207. At this time, the valve 52 is controlled to allow air to flow to the engine main body portion 14 so that the engine 10 is operated appropriately. Note that when the engine 10 is restarted, the power generation device 40 is maintained in the operative condition for at least a certain period of time. However, the power generation device 40 may be switched to the stopped condition immediately after the engine 10 is restarted.

When the engine 10 is started in step S205, the turbocharger 24 is driven as described above. In this condition, the valve 52 is switch-controlled to the engine operation permission position, or in other words the valve position I or the valve position II, whereby the air that is increased in pressure by the compressor 28 is supplied rapidly to the engine main body portion 14. As a result, the engine 10 is activated early when restarted, enabling an improvement in the operation response of the engine 10.

Note that when the engine 10 is stopped by the idle reduction control, the compressor wheel can be driven to rotate by supplying the air that passes through the compressor 28 to the fuel cell main body portion 42, supplying fuel to the fuel cell main body portion 42, and supplying the exhaust gas discharged from the fuel cell main body portion 42 to the turbine 26. In so doing, the turbocharger 24 is not stopped when the engine 10 is stopped by the system 84.

Further, by operating the power generation device 40 when the engine 10 is stopped by the idle reduction control, the exhaust gas from the power generation device 40 flows into the exhaust gas purification device 36. Therefore, catalyst warming can be performed in the exhaust gas purification device 36 even when the engine 10 is stopped by the idle reduction control. As a result, an engine stoppage through idle reduction control can be permitted even in a cold period.

Next, a second embodiment of the invention will be described in detail. Note, however, that configurations of an engine and a vehicle in which the engine is installed according to the second embodiment of the invention are substantially identical to the configurations of the engine 10 and the vehicle 12 in which the engine 10 is installed according to the first embodiment described above. Therefore, the engine and the vehicle according to the second embodiment are not shown in the drawings, and constituent elements corresponding to constituent elements already described have been allocated identical reference numerals to those used above, while duplicate description of these constituent elements has been omitted.

In the second embodiment, similarly to the first embodiment, the engine 10 installed in the vehicle 12 includes the turbocharger 24 and the power generation device 40. Further, as in the above description, the engine 10 and the vehicle 12 are configured such that during the period between stoppage and restarting of the engine 10 by the system 84, the power generation device 40 is operated such that the turbocharger 24 is set in the driven condition, thereby improving the operation response of the engine 10 when restarted.

As described above, the predetermined restarting condition of the idle reduction control is established when one of the predetermined stopping conditions is no longer satisfied. For example, the predetermined restarting condition is determined to be satisfied when a brake operation is released or the accelerator pedal is depressed while the engine 10 is stopped by the system 84. Further, depression of the accelerator pedal indicates issuance of an acceleration request.

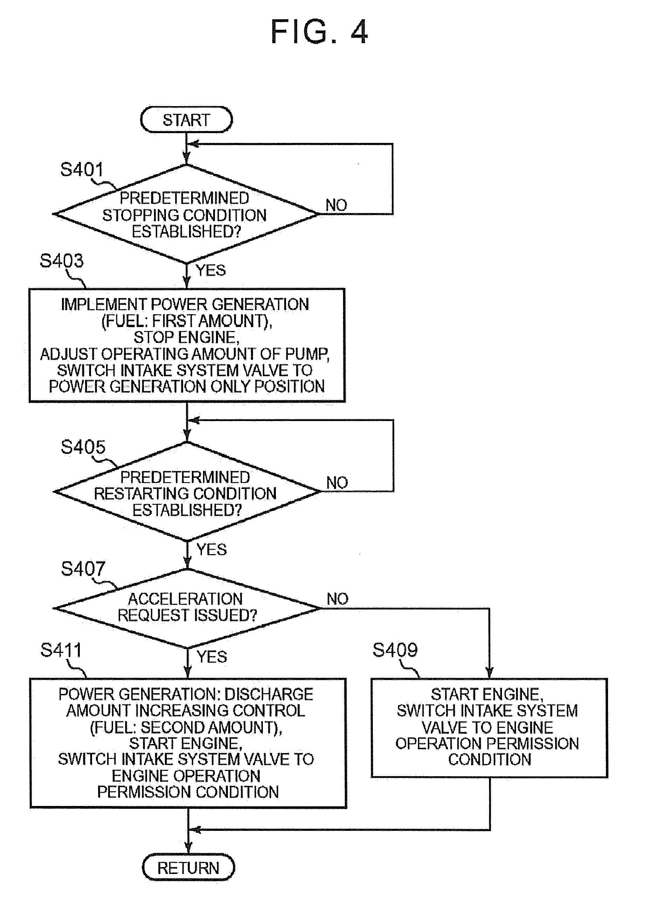

The operation response of the engine 10 required by the driver is assumed to differ between a case in which the brake operation is simply released and a case in which an acceleration request is issued. In this embodiment, therefore, when the predetermined restarting condition is established and an acceleration request is also issued (when an acceleration request is detected), control is executed to generate a different operation response in the engine 10 to that of a case in which an acceleration request is not issued. This control will be described below on the basis of a flowchart shown in FIG. 4.

Note that steps S401 to S405 and step S409 in the flowchart of FIG. 4 respectively correspond substantially to steps S201 to S207 in the flowchart of FIG. 2. Description of these steps is therefore substantially omitted below.

When the predetermined stopping condition is established such that a determination of step S401 is affirmative, the engine 10 is stopped and the power generation device 40 is set in the operative condition in step S403. At this time, the fuel supply device 48 of the power generation device 40 is operated such that the fuel supply amount corresponds to a first amount.

As described in the first embodiment, when the engine 10 is stopped by the idle reduction control, the valve 32 basically remains closed. Hence, an amount of power generated by the power generation device 40 and an amount of gas discharged from the power generation device 40 at this time are determined by the amount of fuel supplied to the fuel cell main body portion 42. Here, therefore, when the power generation device 40 is operated in step S403, fuel supply to the power generation device 40 is controlled by a part of the ECU 70 that functions as discharge amount increasing means. Here in particular, the fuel supply amount is controlled to a first fuel amount on the basis of the output of the air flow meter 72 so that the amount of gas discharged from the power generation device 40 reaches a first discharge amount. Note that the fuel supply in the power generation device 40 may be controlled on the basis of at least one of the air flow meter 72, an intake air pressure sensor provided in the intake passage, and so on.

When the predetermined restarting condition is established following establishment of the predetermined stopping condition during the idle reduction control such that the determination of step S405 is affirmative, a determination is made in step S407 as to whether or not an acceleration request has been issued. The acceleration request indicates that the driver requires an increase in an output of the engine 10. Here, the existence of an acceleration request is determined by a part of the ECU 70 that functions as acceleration request determining means in accordance with the output of the accelerator depression amount sensor 74 serving as acceleration request detecting means. An acceleration request is determined to have been issued when the predetermined restarting condition is established while the engine 10 is stopped by the idle reduction control and the accelerator depression amount is larger than a predetermined value. Alternatively, an acceleration request is determined to have been issued when the predetermined restarting condition is established while the engine 10 is stopped by the idle reduction control and variation in the acceleration depression amount over a predetermined time (an accelerator depression amount variation speed) is larger than a predetermined amount.

It is also preferably determined in step S407 that an acceleration request has been issued when the accelerator depression amount increases beyond the predetermined value or the accelerator depression amount variation speed increases beyond the predetermined amount in a case where the driver depresses the accelerator pedal immediately, or within a predetermined period, after releasing his/her foot from the brake pedal such that the predetermined restarting condition is established (i.e. the determination of step S405 is affirmative). Hence, it may be determined that an acceleration request has been issued even when the engine 10 is not in the stopped condition. The reason for this is that a time lag may occur likewise when an acceleration request is issued within a predetermined period after the predetermined restarting condition is established, and it is therefore effective to apply the invention in such a case to improve the operation response of the engine 10. Note that the predetermined period is a period in which the time lag is predicted to occur, and may be set by experiment. The predetermined period can be measured by a part of the ECU 70 that functions as timer means.

When an acceleration request has not been issued such that the determination of step S407 is negative, the engine 10 is restarted in step S409, similarly to step S207. In other words, in this case, the engine 10 is restarted in a condition where fuel is supplied to the power generation device 40 in the first fuel amount such that the power generation device 40 is operative. Accordingly, the operation response of the engine 10 is based on a turbocharging effect generated by the turbocharger in accordance with the first gas discharge amount corresponding to the first fuel amount.

When, on the other hand, an acceleration request is issued upon establishment of the predetermined restarting condition or within the predetermined period following establishment of the predetermined restarting condition such that the determination of step S407 is affirmative, the engine 10 is restarted in step S411 together with discharge amount increasing control, which is executed by the part of the ECU 70 that functions as the discharge amount increasing means. Here, the part of the ECU 70 that functions as the discharge amount increasing means performs control to increase the fuel supply amount of the power generation device 40 from the first fuel amount to a second fuel amount that is larger than the first fuel amount. Accordingly, the amount of gas discharged from the gas discharge passage 50 of the power generation device 40 reaches a second discharge amount, which is larger than the first discharge amount discharged when fuel is supplied to the power generation device 40 in the first fuel amount. As a result, the turbocharging effect generated in the engine 10 by the turbocharger 24 can be improved. Hence, the operation response of the engine 10 can be improved to a greater degree when the engine 10 is restarted in step S411 than when the engine 10 is restarted in step S409. Note that in step S411, similarly to step S409, the valve 52 is controlled to the engine operation permission position.

In the second embodiment, the valve 32 is essentially in a closed condition when the predetermined stopping condition is established, and when an acceleration request is issued thereafter such that the predetermined restarting condition is established, the fuel amount of the power generation device 40 is increased in comparison with a case where an acceleration request is not issued. However, the gas discharge amount may be increased using other control when an acceleration request is issued.

For example, when the predetermined stopping condition is established, the valve 32 may be controlled in step S403 to open to a predetermined opening (other than a closed opening). In this case, the valve 32 is preferably a solenoid driven valve. When an acceleration request is issued thereafter such that the predetermined restarting condition is established, the valve 32 or the valve mechanism 28 can be completely closed as the discharge amount increasing control, whereby the amount of air supplied to the air introduction passage 44 can be increased (air supply amount increasing control). Together with this increase in the air amount, the fuel amount of the power generation device 40 is preferably increased as the discharge amount increasing control. Note, however, that the fuel amount of the power generation device 40 need not be increased together with the increase in the air amount.

In the second embodiment, when an acceleration request is issued (when the determination of step S407 is affirmative), the power generation device 40 is operated continuously at least until restarting of the engine 10 is complete.

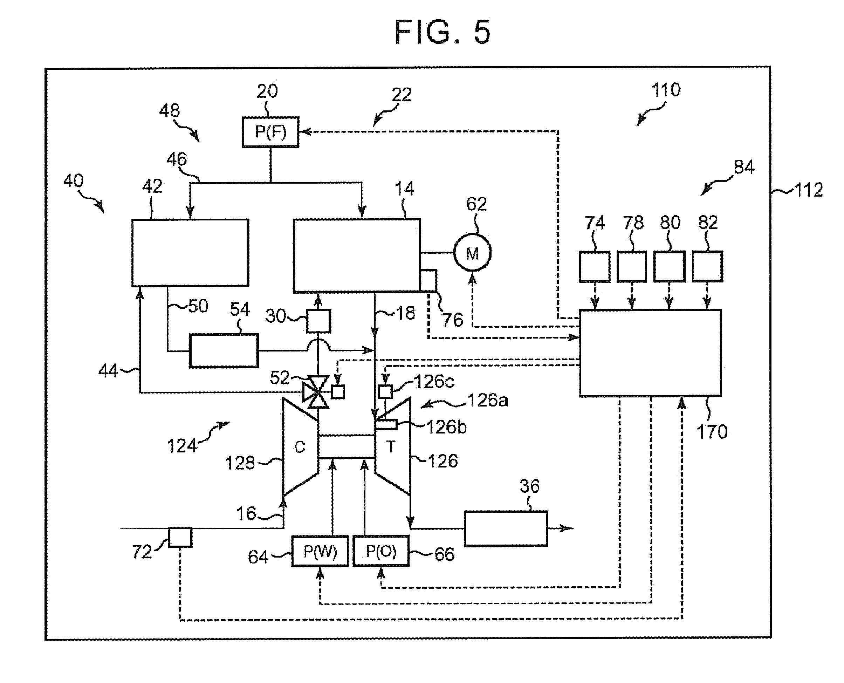

Next, a third embodiment of the invention will be described in detail. An engine 110 and a vehicle 112 in which the engine 110 is installed according to the third embodiment of the invention are shown in FIG. 5. Note that constituent elements corresponding to constituent elements already described have been allocated identical or related reference numerals to those used above, and duplicate description of these constituent elements has been omitted.

The engine 110 installed in the vehicle 112 according to the third embodiment differs from the engine 10 installed in the vehicle 12 in a configuration of a turbocharger 124. In accordance with this configuration difference, a configuration of an ECU 170 differs partially from the configuration of the ECU 70. In all other respects, excluding control to be described below, the engine 110 and the vehicle 112 are configured substantially identically to the engine 10 and the vehicle 12, respectively.

In the third embodiment, the turbocharger 124 includes a turbine 126 disposed in the exhaust passage 18, and a compressor 128 that is disposed in the intake passage 16 and houses a compressor wheel connected coaxially to a turbine wheel of the turbine 126. The turbocharger 124 further includes a variable nozzle mechanism 126a for varying an opening area of a turbine blade of the turbine wheel of the turbine 126. Note that the turbocharger 124 does not include the valve 32 and the bypass passage 34.

The variable nozzle mechanism 126a includes a plurality of nozzle vanes 126b and a driving mechanism portion 126c. Angles of the plurality of nozzle vanes 126b are variable, and by varying the angles through an operation of the driving mechanism portion 126c, a nozzle opening can be adjusted. The driving mechanism portion 126c includes a motor, an operation of which is controlled by the ECU 70. In the turbocharger 124, therefore, the turbocharging pressure can be adjusted by adjusting the nozzle opening of the variable nozzle mechanism 126a. Note that during normal travel, the nozzle opening of the variable nozzle mechanism 126a is controlled by a part of the ECU 70 that functions as nozzle opening control means on the basis of at least one of the engine rotation speed and an engine load.

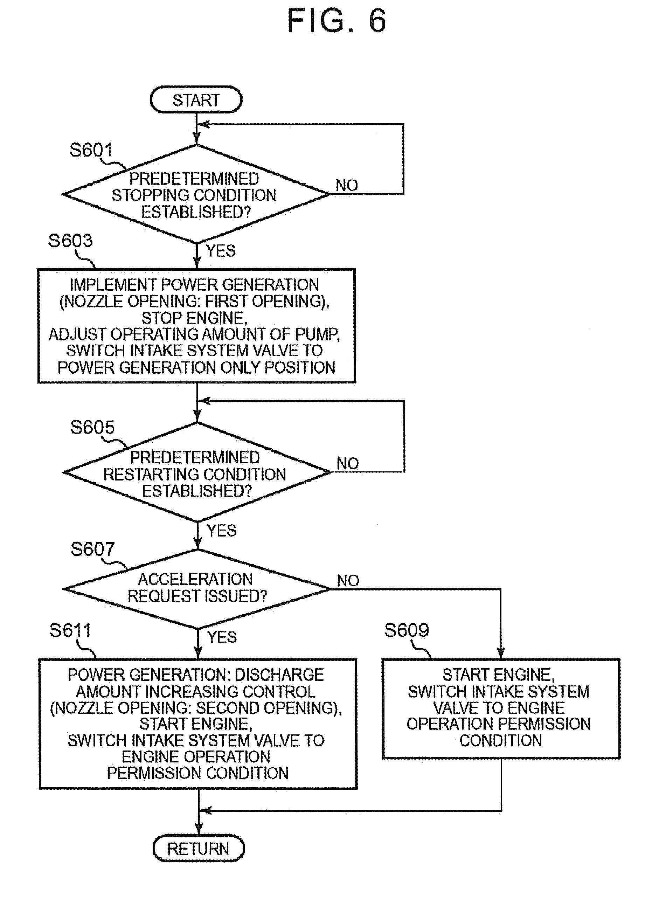

In the engine 110 having this configuration, similarly to the engine of the second embodiment, when an acceleration request is issued upon establishment of the predetermined restarting condition or within the predetermined period following establishment of the predetermined restarting condition, control is executed to vary the operation response of the engine 10 relative to the operation response of the engine 10 when an acceleration request is not issued. This control will be described below on the basis of a flowchart shown in FIG. 6.

Note that steps S601 to S611 of the flowchart in FIG. 6 correspond respectively to steps S401 to S411 of the flowchart in FIG. 4 except for parts of steps S603 and S611. Hence, the control executed in the third embodiment will be described below by focusing on differences in the steps while partially omitting duplicate description.

When the predetermined stopping condition is established such that the determination of step S601 is affirmative, the engine 110 is stopped and the power generation device 40 is set in the operative condition in step S603. At this time, the nozzle opening of the variable nozzle mechanism 126a of the turbocharger 124 is set at a first opening such that a predetermined amount of fuel is supplied to the fuel cell main body portion 42 in accordance with the amount of air introduced from the air introduction passage. Here, the fuel supply amount in the power generation device 40 is controlled on the basis of the output of the air flow meter 72, but the fuel supply amount may be controlled on the basis of at least one of the air flow meter 72, the intake air pressure sensor provided in the intake passage, and so on.

When the predetermined restarting condition is established while the engine 110 is in the stopped condition following establishment of the predetermined stopping condition such that the determination of step S605 is affirmative, a determination is made in step S607, similarly to step S407, as to whether or not an acceleration request has been issued.

When an acceleration request has not been issued such that the determination of step S607 is negative, the engine 110 is restarted in step S609, similarly to steps S207 and S409. In other words, in this case, the engine 110 is restarted in a condition where the nozzle opening of the variable nozzle mechanism 126a is set at the first opening and the power generation device 40 is operative. Accordingly, the operation response of the engine 10 is based on a turbocharging effect generated by the turbocharger 124 in accordance with a third gas discharge amount corresponding to this nozzle opening.

When, on the other hand, an acceleration request is issued such that the determination of step S607 is affirmative, the engine 110 is restarted in step S611 together with the discharge amount increasing control. Here, the part of the ECU 170 that functions as the discharge amount increasing control means controls the nozzle opening of the variable nozzle mechanism 126a to a second opening further toward a throttle side than the first opening, and at the same time executes control to increase the fuel supply amount of the power generation device 40. Accordingly, the amount of gas discharged from the gas discharge passage 50 of the power generation device 40 increases beyond that of a case in which the nozzle opening of the variable nozzle mechanism 126a is set at the first opening. As a result, the turbocharging effect generated in the engine 110 by the turbocharger 124 can be improved. Hence, the operation response of the engine 110 can be improved to a greater degree when the engine 110 is restarted in step S611 than when the engine 110 is restarted in step S609. Note that in step S611, similarly to step S609, the valve 52 is controlled to the engine operation permission position.

Likewise in the third embodiment, when an acceleration request is issued (when the determination of step S607 is affirmative), the power generation device 40 is operated continuously at least until restarting of the engine 110 is complete.

The invention was described above on the basis of three embodiments, but the invention is not limited to these embodiments. For example, in the above embodiments, the power generation device 40 is constituted by a fuel cell system, but the invention allows a case in which a configuration other than a fuel cell system is used as the power generation device, and therefore various devices may be used as the power generation device.

The invention was described above on the basis of the above embodiments and modified examples thereof. However, the invention is not limited to these embodiments and so on, and allows other embodiments. The invention includes all modified examples, applications, and equivalents within the scope of the invention defined by the claims.

## Claims

1. An internal combustion engine comprising:
a system that automatically stops the internal combustion engine when a predetermined stopping condition is established and automatically restarts the internal combustion engine when a predetermined restarting condition is established following establishment of the predetermined stopping condition;
a turbocharger including a compressor provided in an intake passage of the internal combustion engine and a turbine provided in an exhaust passage of the internal combustion engine; and
a power generation device including a power generation main body portion to which an air introduction passage, which is connected to the intake passage to be capable of introducing air that passes through the compressor, and a gas discharge passage, which is connected to the exhaust passage to be capable of supplying gas to the turbine, are connected, the power generation device being configured to operate at least when the internal combustion engine is stopped by the system.

2. The internal combustion engine according to claim 1, wherein the power generation device is a fuel cell system, and the power generation main body portion is a fuel cell main body portion.

3. The internal combustion engine according to claim 1 or 2, wherein a cooling device is provided in the intake passage on a downstream side of a connection portion between the air introduction passage and the intake passage.

4. The internal combustion engine according to any one of claims 1 to 3, wherein a valve is provided in a connection portion between the air introduction passage and the intake passage, and
when the internal combustion engine is stopped by the system, the valve is operated to introduce all of the air that passes through the compressor into the air introduction passage.

5. The internal combustion engine according to any one of claims 1 to 4, wherein an oil supply device configured to supply oil in the turbocharger and a cooling liquid supply device configured to cool the turbocharger can be operated by electricity from a battery connected to the power generation device, and are operated when the internal combustion engine is stopped by the system.

6. The internal combustion engine according to claim 5, wherein at least one of the oil supply device and the cooling liquid supply device is operated to control a charging amount of the battery.

7. The internal combustion engine according to any one of claims 1 to 6, further comprising discharge amount increasing control means for increasing an amount of gas discharged from the power generation device when an acceleration request is issued either upon establishment of the predetermined restarting condition or within a predetermined period following establishment of the predetermined restarting condition, in comparison with a case where the acceleration request is not issued.

8. The internal combustion engine according to claim 7, wherein the discharge amount increasing control means increases the amount of discharged gas by executing at least one of control to increase an amount of air supplied to the air introduction passage and control to increase an amount of fuel supplied to the power generation main body portion.

9. The internal combustion engine according to claim 8, further comprising a valve mechanism for adjusting an amount of exhaust gas flowing into the turbine,
wherein, when the acceleration request is issued, the discharge amount increasing control means either controls the valve mechanism to increase the amount of exhaust gas flowing into the turbine or executes the control to increase the amount of fuel supplied to the power generation main body portion, in comparison with a case where the acceleration request is not issued.

10. The internal combustion engine according to claim 8, wherein the turbocharger further includes a variable nozzle mechanism for varying an opening area of a turbine blade of the turbine, and
when the acceleration request is issued, the discharge amount increasing control means controls the variable nozzle mechanism to increase a rotation speed of the turbine blade and executes the control to increase the amount of fuel supplied to the power generation main body portion, in comparison with a case where the acceleration request is not issued.

11. A vehicle comprising the internal combustion engine according to any one of claims 1 to 10.
